# EUROPEAN PATENT APPLICATION

(11) **EP 3 154 226 A1**
(43) Date of publication of application: **12.04.2017**
(21) Application number: 14892784.1
(22) Date of filing: 21.08.2014
(51) Int. Cl.: H04L 12/28

(54) **NETWORKING METHOD AND APPARATUS FOR WIRED UNIVERSAL MEDIA NETWORKING TECHNOLOGY OF HOME NETWORK**

(30) Priority: 23.05.2014 CN 201410223233
(71) Applicant: ZTE Corporation, Shenzhen City, Guangdong Province 518057 (CN)
(72) Inventor: XU, Aijun, Shenzhen Guangdong 518057 (CN); LI, Xinlong, Shenzhen Guangdong 518057 (CN); ZHANG, Weiliang, Shenzhen Guangdong 518057 (CN); CHEN, Wu, Shenzhen Guangdong 518057 (CN)
(74) Representative: Winter, Brandl, Fürniss, Hübner, Röss, Kaiser, Polte - Partnerschaft mbB
(86) International application number: PCT/CN2014/084954
(87) International publication number: WO 2015/176410

(57) **Abstract**

The present disclosure discloses a networking method and apparatus for a home network with a universal wired medium networking technology. The method includes: receiving, by a Ghn network device, a key-press operation; broadcasting a notice of open registration of a current domain and receiving joining application information of applying for joining in the current domain from an extra-domain node in a first preset time window, by the G.hn network device; determining, by the G.hn network device, whether a signal intensity of the extra-domain node transmitting the joining application information is greater than or equal to a first preset threshold; and allowing, by the Ghn network device, the extra-domain node to join in the current domain if the signal intensity of the extra-domain node transmitting the joining application information is not less than the first preset threshold. According to the present disclosure, the problem in the related art that operation modes for a Ghn networking configuration are complicated is solved. The efficiency of Ghn networking configuration is greatly improved, and thus facilitating the use of the user, and improving the user experience.

## Description

### TECHNICAL FIELD

The present disclosure relates to the field of communications, and in particular relates to a networking method and apparatus for a home network with a universal wired medium networking technology G.hn (standards of ITU Unified high-speed wireline-based home networking transceivers).

### BACKGROUND

Ghn standard specifies a universal networking technology for the home network, and adopts power lines, phone lines and coaxial cables as media.

Ghn defines a concept of "Domain" of a logical network. A domain is identified with a Domain Name (DN for short), and different networks have different domain names, which is similar to a Service Set Identifier (SSID for short) of Wireless Fidelity (WiFi for short). Each domain has a Domain master and at least one common Node. The Domain master undertakes management tasks such as the access, exit, authentication, broadband allocation of other nodes in the domain. The Domain master sends a message frame of a medium access plan (MAP for short) regularly. The message frame includes a Domain Name, a Domain Name Index (DNI for short, calculated from the domain name through a certain algorithm), a registration code, a domain ID (DOD for short), and the like.

Operations for networking configuration should be completed before a network node device of the G.hn standard being used, and the substantial content of the networking configuration is to configure node devices needed to be interconnected with same parameters such as network domain name and password.

A current operation method for networking configuration mainly includes two manners of manually inputting parameters and configuring by pressing keys.

According to the manner of manually inputting parameters, manually inputting parameters through a software configuration interface by a user is needed to be simple, which requires the user to have certain basic knowledge related to network configuration.

According to the manner of configuring by pressing keys, the user needs to press a networking key on a housing of a node device. The duration of pressing the key corresponds to different definitions of device actions (for example, pressing for 3-7 seconds indicates building a secure network, pressing for 7-10 seconds indicates restoring an unsecure default network, and pressing for more than 10 seconds indicates restoring all factory defaults by the device).

Table 1 below shows networking results of key-press operations of four nodes:

**Table 1**

| Steps | Operations | Node A | Node B | |
|---|---|---|---|---|
| 1 | Factory settings | The domain name is Default, and there is no password | The domain name is Default, and there is no password | Build an unsecure network by default |
| 2 | Press the key for 3-7s (an interval time of pressing the key at two devices is less than 120s) | The domain name is Random1, and the password is pw1 | The domain name is Random1, and the password is pw1 | Build a secure network |

| 3 | | Node C | Node D | |
|---|---|---|---|---|
| 4 | Factory settings | The domain name is Default, and there is no password | The domain name is Default, and there is no password | Build an unsecure network by default |
| 5 | Press the key for 3-7s (an interval time of pressing the key at two devices is less than 120s) | The domain name is Random2, and the password is pw2 | The domain name is Random2, and the password is pw2 | Build a secure network |

| | | Node A | Node C | |
|---|---|---|---|---|
| 6 | Press the key for 3-7s at A and C (an interval time of pressing the key at two devices is less than 120s) | The domain name is Random1, and the password is pw1 | The domain name is Random2, and the password is pw2 | Unable to perform networking |
| 7 | Press the key at C for more than 7s. | | The domain name is Default, and there is no password | |
| 8 | Press the key for 3-7s (an interval time of pressing the key at two devices is less than 120s) | The domain name is Random1, and the password is pw1 | The domain name is Random1, and the password is pw1 | Build a secure network |

As can be seen from step 6 in the above table, networking cannot be realized by node devices assigned to different networks through pressing keys, and networking can only be achieved until one device has exited from the secure network.

In summary, with respect to networking by pressing keys, the user needs to know a current state of the node device and strictly control the duration for pressing the key, which increases the operating difficulty of the user, easily causes misoperations of the user and causes a failure to build a network.

At present, an effective solution has not been proposed with respect to the problem in the related art that the operation manners of a G.hn networking configuration are complicated.

### SUMMARY

The embodiments of the present disclosure provide a networking method and apparatus for a home network with a universal wired medium networking technology, so as to solve at least the problem in the related art that the operation manners of the G.hn networking configuration are complicated.

According to an embodiment of the present disclosure, a networking method for a home network with a universal wired medium networking technology (G.hn) is provided, including: receiving, by a G.hn network device, a key-press operation; broadcasting a notice of open registration of a current domain and receiving joining application information of applying for joining in the current domain from an extra-domain node in a first preset time window, by the Ghn network device; determining, by the G.hn network device, whether a signal intensity of the extra-domain node transmitting the joining application information is greater than or equal to a first preset threshold; and allowing, by the G.hn network device, the extra-domain node to join in the current domain if the signal intensity of the extra-domain node transmitting the joining application information is not less than the first preset threshold.

Before receiving, by a G.hn network device, a key-press operation, the method further includes: detecting, by the G.hn network device which is non-networked, whether there currently exists an intra-domain node of which a signal intensity is greater than or equal to a second preset threshold; and adopting the G.hn network device as a domain master of the current domain if there does not exist the intra-domain node of which the signal intensity is not less than the second preset threshold.

Before receiving, by a G.hn network device, a key-press operation, the method further includes: if there exists the intra-domain node of which the signal intensity is greater than or equal to the second preset threshold, transmitting the joining application information to the intra-domain node by the G.hn network device which is non-networked; or if an notice of open registration broadcasted by the intra-domain node, of which the signal intensity is greater than or equal to the second preset threshold, is received by the G.hn network device which is non-networked, transmitting the joining application information to the intra-domain node by the Ghn network device which is non-networked.

After transmitting the joining application information to the intra-domain node by the Ghn network device which is non-networked, the method further includes: the G.hn network device being allowed to join in the current domain; and setting domain parameters according to parameters of the current domain and saving the set parameters into the G.hn network device's own database, by the G.hn network device.

The method further includes: receiving, by the G.hn network device, a password PW in an encryption manner in the case that the current domain is operated in a security mode; and setting the PW and saving the PW into the G.hn network device's own database by the G.hn network device.

Receiving joining application information of applying for joining in the current domain from an extra-domain node in the first preset time window by the G.hn network device includes: changing a networking lamp of the G.hn network device in the first preset time window.

Before receiving, by a G.hn network device, a key-press operation, the method further includes: in the case that the joining application information of applying for joining in the current domain from the extra-domain node is received by the G.hn network device outside the first preset time window or when the notice of open registration of the current domain is not broadcasted by the G.hn network device, determining, by the G.hn network device, whether the signal intensity of the extra-domain node transmitting the joining application information is greater than or equal to the first preset threshold; changing the networking lamp of the G.hn network device in a second present time window when the signal intensity of the extra-domain node transmitting the joining application information is not less than the first preset threshold; and allowing the extra-domain node to join in the current domain, if the key-press operation is received by the G.hn network device when changing the networking lamp.

According to another embodiment of the present disclosure, a networking apparatus for a home network with a universal wired medium networking technology (G.hn) is provided, located in a G.hn network device, including: a first reception module, configured to receive a key-press operation; a second reception module, configured to broadcast an notice of open registration of current domain, and receive joining application information of applying for joining in the current domain from an extra-domain node in a preset first time window; a first determination module, configured to determine whether a signal intensity of the extra-domain node transmitting the joining application information is greater than or equal to a first preset threshold; and a processing module, configured to allow the extra-domain node to join in the current domain in the case that a determination result of the determination module is yes.

Optionally, the apparatus further includes: a transmission module, configured to detect whether there currently exists an intra-domain node of which the signal intensity is greater than or equal to a second preset threshold, and transmit the joining application information to the intra-domain node of which the signal intensity is greater than or equal to the second preset threshold if a detection result is that there exists the intra-domain node; or, transmit the joining application information to the intra-domain node of which the signal intensity is greater than or equal to the second preset threshold when an notice of open registration broadcasted by the intra-domain node is received.

Optionally, the apparatus further includes: a second determination module, configured to, in the case that the joining application information of applying for joining the current domain from the extra-domain node is received outside the first preset time window or when the notice of open registration of the current domain is not broadcasted by the G.hn network device, determine whether the signal intensity of the extra-domain node transmitting the joining application information is greater than or equal to the first preset threshold; a control module, configured to control the networking lamp to change in a second preset time window in the case that a determination result of the second determination module is yes; and an input module, configured to allow the extra-domain node to join in the current domain if the key-press operation is received when the networking lamp is changed.

In the embodiments of the present disclosure, receiving a key-press operation by a G.hn network device; broadcasting a notice of open registration of current domain and receiving joining application information of applying for joining in the current domain from an extra-domain node in a first preset time window, by the G.hn network device; determining, by the Ghn network device, whether a signal intensity of the extra-domain node transmitting the joining application information is greater than or equal to a first preset threshold; and allowing, by the Ghn network device, the extra-domain node to join in the current domain if the signal intensity of the extra-domain node transmitting the joining application information is greater than or equal to the first preset threshold. In this way, the problem in the related art that operation modes for a Ghn networking configuration are complicated is solved, thereby greatly improving the efficiency of networking configuration with G.hn, facilitating the use of the user, and improving the user experience.

### BRIEF DESCRIPTION OF DRAWINGS

Drawings described herein are used for providing further understanding of the present disclosure, and constitute a part of the present application. Schematic embodiments of the present disclosure and the description thereof are used for illustrating the present disclosure, and not constituting an improper limit to the present disclosure. In the drawings:
FIG. 1 is a flow diagram of a networking method with G.hn according to the embodiments of the present disclosure;
FIG. 2 is a structural block diagram of a networking apparatus with G.hn according to the embodiments of the present disclosure;
FIG. 3 is a networking flow diagram of an implementation method I according to preferred embodiments of the present disclosure.
FIG. 4 is a networking flow diagram of an implementation method II according to preferred embodiments of the present disclosure.

### DETAILED DESCRIPTION

The present disclosure will be described in details with reference to the drawings and in combination with embodiments hereinafter. It should be noted that, the embodiments and features in the embodiments in the present application can be mutually combined under a non-conflict condition.

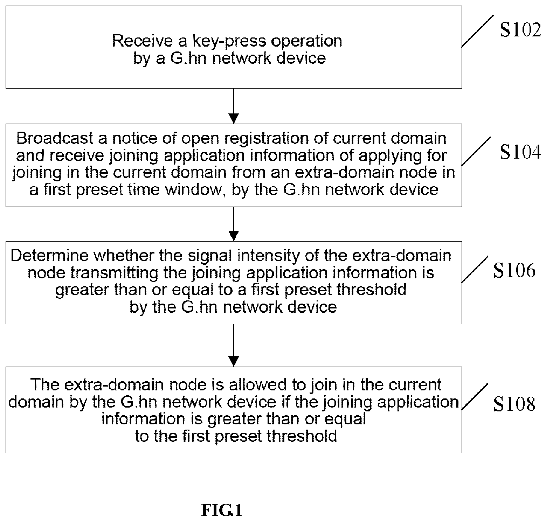

In the present embodiment, a networking method for a home network with a universal wired medium networking technology (G.hn) is provided. Fig. 1 is a flow diagram of a networking method with G.hn according to the embodiments of the present disclosure. As shown in Fig. 1, the method includes the following steps:

In step S102, a key-press operation is received by a G.hn network;

In step S104, a notice of open registration of a current domain is broadcasted by the Ghn network device, and joining application information of applying for joining in the current domain from an extra-domain node is received by the G.hn network device in a first preset time window;

In step S106, it is determined by the G.hn network device whether the signal intensity of the extra-domain node transmitting the joining application information is greater than or equal to a first preset threshold;

In step S108, the above extra-domain node is allowed to join in the current domain by the G.hn network device if the signal intensity of the extra-domain node is greater than or equal to the first preset threshold.

According to the above steps in the present embodiment, in the case that the operation for pressing keys is received by the G.hn network device, the notice of open registration of the current domain is broadcasted by the G.hn network device, and it is determined by the G.hn network device, based on a determination result regarding whether the signal intensity of an extra-domain node applying for joining in is greater than or equal to the first preset threshold, whether the extra-domain node is allowed to join in the current domain, so that networking configuration operations are completed by the G.hn network device its self after being triggered by the key-press operation. Therefore, the problem in the related art that the operation modes for networking configuration with G.hn are complicated is solved, thereby greatly improving the efficiency of networking configuration with G.hn, facilitating the use of the user, improving the user experience.

Optionally, before the key-press operation being received by the G.hn network device which is non-networked, it can be firstly detected whether there currently exists an intra-domain node of which the signal intensity is greater than or equal to a second preset threshold. If there does not exist an intra-domain node of which the signal intensity is greater than or equal to the second preset threshold, the G.hn network device can serve as a domain master of the current domain and broadcast a notice of open registration of the current domain. If there exists an intra-domain node of which the signal intensity is greater than or equal to the second preset threshold, the above joining application information can be transmitted to the above intra-domain node by the G.hn network device which is non-networked. Alternatively, in the case that the notice of open registration broadcasted by the intra-domain node of which the signal intensity is greater than or equal to the second preset threshold, is received by the G.hn network device which is non-networked, the joining application information can be transmitted to the above intra-domain node by the G.hn network device which is non-networked.

It should be noted that, the "first" and "second" herein are only used for convenient expression, but do not include limited significances of sequences and other special meanings. The first preset threshold and the second preset threshold may have different values, or have same value.

Optionally, after the joining application information being transmitted to the intra-domain node by the G.hn network device which is non-networked, if the G.hn network device is allowed to join in the current domain, domain parameters may be set by the G.hn network device according to the parameters of the current domain and the set parameters are saved into the G.hn network device's own database.

Optionally, if the current domain is operated in a security mode, a pass word (PW for short) can be further received in an encryption manner, set and saved into the G.hn network device's own database, by the G.hn network device.

As a preferred embodiment, if the G.hn network device serves as a domain master, after the notice of open registration of the current domain being broadcasted, the networking lamp of the G.hn network device can be changed in the first preset time window in which the open registration is performed.

However, in the case that it is outside of the first preset time window, or in the case that the notice of open registration of the current domain is not broadcasted by the G.hn network device, the joining application information transmitted from other extra-domain nodes is received by the G.hn network device and it is determined that the signal intensity thereof meets the requirement of being greater than or equal to the first preset threshold, then the networking lamp can be changed in a second preset time window, so as to notify the user that an extra-domain node meeting the requirement requests to join in the current domain. If the key-press operation is received by the G.hn network device in the case that the networking lamp is changed, it is determined that the user permits the extra-domain node to join in the current domain. At this moment, the extra-domain node can be allowed to join in the current domain by the G.hn network device.

Corresponding to the above networking method with G.hn, a networking apparatus with Ghn is provided in the present embodiment. The networking apparatus is located in a G.hn network device, and is configured to implement the above embodiments and preferred implementation manners. Illustrations that have been set forth are not repeated. The term "module" as used hereinafter can be implemented as combination of software and/or hardware with preset functions. Although the apparatus described in the embodiments is better implemented by software, it is also possible to implement/conceived of implementing through hardware or a combination of software and hardware.

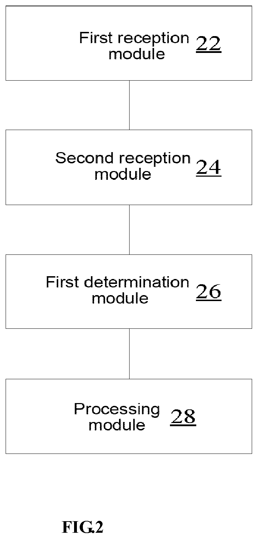

Fig. 2 is a structural block diagram of a networking apparatus with G.hn according to the embodiments of the present disclosure. As shown in Fig. 2, the networking apparatus includes a first reception module 22, a second reception module 24, a first determination module 26 and a processing module 28. Each module is described in details in the followings:
the first reception module 22 is configured to receive a key-press operation; the second reception module 24 is connected with the first reception module 22, and is configured to broadcast a notice of open registration of a current domain, and receive joining application information of applying for joining in the current domain from an extra-domain node in a preset first time window; the first determination module 26 is connected with the second reception module 24, and is configured to determine whether the signal intensity of the extra-domain node transmitting the joining application information is greater than or equal to a first preset threshold; and the processing module 28 is connected with the first determination module 26, and is configured to allow the extra-domain node to join in the current domain in the case that a determination result of the first determination module 26 is yes.

Optionally, the apparatus can further include: a transmission module, configured to detect whether there currently exists an intra-domain node of which the signal intensity is greater than or equal to a second preset threshold, and transmit the joining application information to the intra-domain node in the case that a detection result is that there exists the intra-domain node of which the signal intensity is greater than or equal to the second preset threshold; or, receive the notice of open registration broadcasted by the intra-domain node of which the signal intensity is greater than or equal to the second preset threshold, and transmit the joining application information to the intra-domain node.

Optionally, the above apparatus can further include: a second determination module, configured to, in the case that the joining application information of applying for joining the current domain from the extra-domain node is received outside the first preset time window or when the notice of open registration of the current domain is not broadcasted by the G.hn network device, determine whether the signal intensity of the extra-domain node transmitting the joining application information is greater than or equal to the first preset threshold; a control module, configured to control a networking lamp to be changed in the second preset time window in the case that a determination result of the second determination module is yes; and an input module, configured to allow the extra-domain node to join in the current domain if the key-press operation is received when the networking lamp is changed.

Illustrations are provided in conjunction with preferred embodiments. The following preferred embodiments are combined with the embodiments above and the preferred implementation manners thereof.

In the following preferred embodiments, a solution of building a G.hn network is provided. The solution is applicable to simplified key networking of a local area network device. According to the solution, a setting process by the user can be simplified, misoperations are reduced, and a secure and reliable local area network is conveniently and rapidly built. The solution of building the G.hn network mainly includes the following two implementation methods:

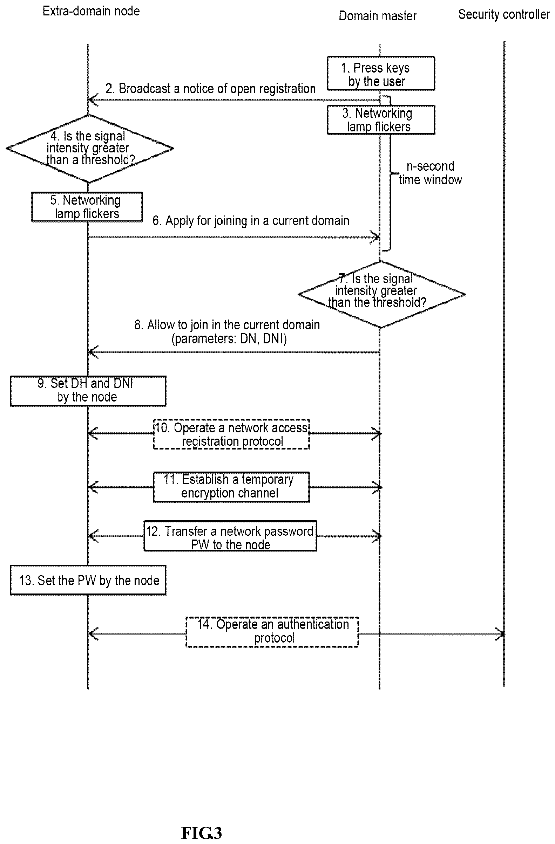

Fig. 3 is a networking flow diagram of an implementation method I according to preferred embodiments of the present disclosure. As shown in Fig. 3, the implementation method I includes:
   In Step 1, a key-press operation is performed on any node in a current domain in operation by the user;
   In Step 2, a registration time window is opened in the current domain, and a notice of open registration is periodically broadcasted by the domain master in the time window;
   At this time, in Step 3, a networking indication lamp of the node, on which the key-press operation is performed, is changed into a networking state in the open registration time window;
   In Step 4, the notice of open registration is received by an extra-domain node, and it is determined by the extra-domain node whether the signal intensity transmitted from the intra-domain node is greater than a registration signal threshold;
   In Step 5, if the signal intensity is greater than the registration signal threshold, a networking indication lamp of the extra-domain node is changed into a networking state, otherwise, the extra-domain node will not join in the domain, and the process is terminated;
   In Step 6, a joining application information is transmitted by the extra-domain node, so as to request to join in the current domain;
   In Step 7, after the joining application information being received by the domain master, it is determined by the domain master whether the signal intensity of the extra-domain node is greater than the registration signal threshold;
   In Step 8, if the signal intensity is greater than the registration signal threshold, a joining permission information is transmitted by the domain master to allow a new node to join in the domain; otherwise, it is not allowed to join in the domain;
   In Step 9, the Domain Name and DNI parameters of the extra-domain node are set to be the same as those of the domain master and saved into the extra-domain node's own database, by the extra-domain node, and thus the extra-domain node becomes a new intra-domain node;
   In Step 10, a network access registration protocol is operated;
   In Step 11, a temporary encryption channel is established if the current domain is operated in a security mode;
   In Step 12, the PW is transmitted to the new node in an encryption manner by the domain master;
   In Step 13, the PW is set and saved into the new node's own database by the new node;
   In Step 14, an authentication protocol is operated, and the networking indication lamp of the new node is changed into a networked state after networking succeeds; if networking fails, the new node performs networking by itself according to its parameters.

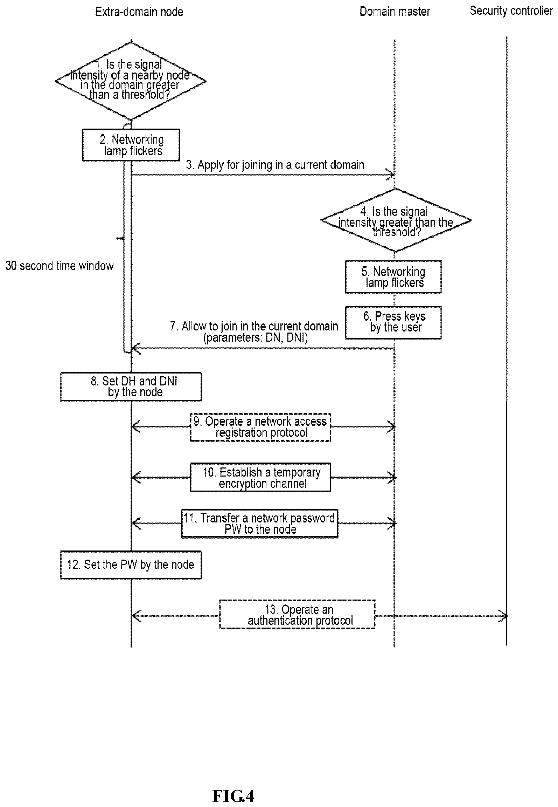

Fig. 4 is a networking flow diagram of an implementation method II according to preferred embodiments of the present disclosure. As shown in Fig. 4, the implementation method II includes:
   In Step 1, after being powered on, the extra-domain node detects signal intensity of nearby intra-domain nodes in operation;
   In Steps 2-3, if the signal intensity is greater than a registration signal threshold, a joining application information is periodically transmitted, the times of the transmitting are limited, and the networking indication lamp of the extra-domain node is changed into a networking state during the period of transmitting;
   In Step 4, after the joining application information being received by a domain master of the current domain in operation, it is checked whether the signal intensity is greater than the registration signal threshold;
   In Step 5, if the signal intensity is greater than the threshold value, the networking lamp in the intra-domain node is changed in a specific time window, to notify the user that an extra-domain node with high signal intensity requests to join in the domain; otherwise, the extra-domain node is not allowed to join in the domain, and the process is terminated.
   In Step 6, the key-press operation is performed on the intra-domain node, the indication lamp of which is changed, by the user;
   In Step 7, it is indicated that a joining permission information is transmitted by the domain;
   In Step 8, after the joining permission information being received by the extra-domain node, the Domain Name and DNI of the extra-domain node are extra-domain nodeset according to parameters of the current domain and saved into the extra-domain node's own database, thus the extra-domain node becomes a new intra-domain node;
   In Step 9, a network access registration protocol is operated;
   In Step 10, a temporary encryption channel is established if the current domain is operated in a security mode;
   In Step 11, the PW is transmitted to the new node in an encryption manner by the domain master;
   In Step 12, the PW is set and saved into the new node's own database;
   In Step 13, an authentication protocol is operated, and a networking indication lamp of the new node is changed into a networked state after networking succeeds; if networking fails, the new node performs networking by itself according to its parameters.

The above two implementation methods and a combination thereof are described in details in conjunction with preferred embodiments.

### Embodiment I:

The user plugs in a first G.hn power line device. After power-on self-test (POST) of the device, if no other device is detected, the device automatically becomes a domain master.

The user plugs in a second G.hn power line device. The parameters of the device, such as Domain Name and the like, are different from those of the domain master, and the device belongs to an extra-domain node.

The user performs an operation for pressing keys on the domain master to open a registration time window for 1 minute, and a networking indication lamp of the domain master flickers within 1 minute.

An open registration information is received by an extra-domain node, and the signal intensity from the domain master is detected by the extra-domain node. If the signal intensity is greater than 15dBm, information of applying for joining in the current domain is transmitted to the domain master by the extra-domain node, and the networking indication lamp of the extra-domain node flickers at this time.

After the information of applying for joining being received, the domain master detects the signal intensity from the new node. If the signal intensity is greater than 15dBm, a joining permission information is transmitted by the domain master, and Domain Name and DNI information of the domain master are saved into the extra-domain node's own database by the extra-domain node, and the extra-domain node becomes a new domain interior node.

If the current domain is operated in a security mode, the PW is transferred to the new node by the domain master in an encryption manner, and the new node joins in the current domain by virtue of standard defined process.

After networking succeeds, the networking indication lamps of the new node and the domain master stop flickering and keep on.

### Embodiment II:

The user plugs in a first G.hn power line device. After POST of the device, if no other device is detected, the device automatically becomes a domain master.

The user plugs in a second G.hn power line device. The parameters of the device, such as Domain Name and the like, are different from those of the domain master, and the device belongs to an extra-domain node. If it is detected by the extra-domain node that the signal intensity from the domain master is greater than 15dBm, information of applying for joining in the current domain is transmitted to the domain master by the extra-domain node periodically (once per 10 seconds and three times in total), and a networking indication lamp of the extra-domain node flickers at this time.

After the information of applying for joining being received, the domain master detects the signal intensity from the extra-domain node, and if the signal intensity is greater than 15dBm, the networking indication lamp of the domain master flickers to notify the user that an extra-domain node requests to join.

The user performs an operation for pressing keys on the domain master, to indicate that the node is allowed to join in, and a joining permission information is transmitted by the domain master.

The Domain name and DNI parameters of the domain master are saved into the extra-domain node's own database by the extra-domain node, thus the extra-domain node becomes a new domain interior node.

If the current domain is operated in a security mode, the PW transferred to the new node by the domain master in an encryption manner, and the new node joins in the current domain by virtue of standard defined process.

After networking succeeds, the networking indication lamps of the new node and the domain master stop flickering and keep on.

### Embodiment III:

The user plugs in a first G.hn power line device. After POST of the device, if no other device is detected, the device automatically becomes a domain master.

The user plugs in a second G.hn power line device. The parameters of the device, such as Domain Name and the like, are different from those of the domain master, and the device belongs to an extra-domain node. If it is detected by the extra-domain node that the signal intensity from the domain master is greater than 15dBm, information of applying for joining in the current domain is transmitted to the domain master by the extra-domain node periodically (once per 10 seconds and three times in total), and a networking indication lamp of the extra-domain node flickers at this time.

If the domain master has no response beyond 30 seconds, the extra-domain node becomes a domain master in a domain to which it belongs.

The user plugs in a third G.hn power line device. The parameters of the device, such as Domain Name and the like, are different from those of the two domain masters in operation, and the third device belongs to an extra-domain node. If it is detected by the extra-domain node that the signal intensity from the domain master is greater than 15dBm, information of applying for joining in the current domain is transmitted to the domain master by the extra-domain node periodically (once per 10 seconds and three times in total), and a networking indication lamp of the extra-domain node flickers at this time.

After the information of applying for joining being received by both of the two domain masters, the signal intensity from the extra-domain node is detected by the two domain masters. If the signal intensity is greater than 15dBm, the networking indication lamp of each domain master flickers to notify the user that an extra-domain node requests to join in the domain.

The user performs an operation for pressing keys on one of the domain masters, to indicate that the node is allowed to join in, and a joining permission information is transmitted by the domain master.

The Domain name and DNI parameters of the domain master are saved into the extra-domain node's own database by the extra-domain node, thus the extra-domain node becomes a new domain interior node.

If the current domain is operated in a security mode, the PW is transferred to the new node by the domain master in an encryption manner, and the new node joins in the current domain by virtue of standard defined process.

After networking succeeds, the networking indication lamps of the new node and the domain master stop flickering and keep on.

In another embodiment, a piece of software is also provided. The software is used to execute technical solutions described in the above embodiments and preferred embodiments.

In another embodiment, a storage medium is also provided. The storage medium is stored with the above software and includes but not limited to an optical disk, a floppy disk, a hard disk, an erasable memory and the like.

Apparently, those ordinary skilled in the art may understand that each module or step of the present disclosure can be implemented by a universal computing apparatus. These modules or steps can be centralized on a single computing apparatus, or distributed on a network formed by a plurality of computing apparatuses, and can be optionally implemented by an executable program code of the computing apparatus, so that they can be stored in a storage device so as to be executed by the computing device. Moreover, in some cases, the illustrated or described steps can be executed in sequences different from herein, or may be manufactured into various integrated circuit modules, or a plurality of modules or steps can be manufactured into a single integrated circuit module so as to implement. In this way, the present disclosure is not limited to any specific combination of hardware and software.

The descriptions above are only preferred embodiments of the present disclosure, not used for limiting the present disclosure. For those skilled in the art, the present disclosure can be subjected to various modifications and changes. Any modification, equivalent replacement, improvement and the like made in the spirit and principle of the present disclosure may be included in the protection scope of the present disclosure.

### INDUSTRIAL APPLICABILITY

As mentioned above, the embodiments of the present disclosure provide a networking method and networking apparatus with G.hn, and have the following beneficial effects of greatly improving the allocation efficiency of networking with G.hn, facilitating the use of the user, and improving the user experience.

## Claims

1. A networking method for a home network with a universal wired medium networking technology G.hn, comprising:
receiving, by a Ghn network device, a key-press operation;
broadcasting a notice of open registration of a current domain and receiving joining application information of applying for joining in the current domain from an extra-domain node in a first preset time window, by the Ghn network device;
determining, by the Ghn network device, whether a signal intensity of the extra-domain node transmitting the joining application information is greater than or equal to a first preset threshold; and
allowing, by the G.hn network device, the extra-domain node to join in the current domain if the signal intensity of the extra-domain node transmitting the joining application information is not less than the first preset threshold.

2. The method according to claim 1, wherein before the step of receiving, by a G.hn network device, a key-press operation, the method further comprises:
detecting, by the G.hn network device which is non-networked, whether there currently exists an intra-domain node of which a signal intensity is greater than or equal to a second preset threshold; and
adopting the Ghn network device as a domain master of the current domain if there does not exist the intra-domain node of which the signal intensity is not less than the second preset threshold.

3. The method according to claim 2, wherein before the step of receiving, by a G.hn network device, a key-press operation, the method further comprises one of the following:
if there exists the intra-domain node of which the signal intensity is greater than or equal to the second preset threshold, transmitting the joining application information to the intra-domain node by the Ghn network device which is non-networked; and
if an notice of open registration broadcasted by the intra-domain node, of which the signal intensity is greater than or equal to the second preset threshold, is received by the Ghn network device which is non-networked, transmitting the joining application information to the intra-domain node by the Ghn network device which is non-networked.

4. The method according to claim 3, wherein after the step of transmitting the joining application information to the intra-domain node by the Ghn network device which is non-networked, the method further comprises:
the Ghn network device being allowed to join in the current domain; and
setting domain parameters according to parameters of the current domain and saving the set parameters into the Ghn network device's own database, by the G.hn network device.

5. The method according to claim 4, further comprising:
receiving, by the Ghn network device, a password PW in an encryption manner in the case that the current domain is operated in a security mode; and
setting the PW and saving the PW into the Ghn network device's own database by the Ghn network device.

6. The method according to any one of claims 1-5, wherein the step of receiving joining application information of applying for joining in the current domain from an extra-domain node in a first preset time window by the G.hn network device comprises:
changing a networking lamp of the Ghn network device in the first preset time window.

7. The method according to any one of claims 1-5, wherein before the step of receiving, by a Ghn network device, a key-press operation, the method further comprises:
in the case that the joining application information of applying for joining in the current domain from the extra-domain node is received by the Ghn network device outside the first preset time window or when the notice of open registration of the current domain is not broadcasted by the G.hn network device, determining, by the G.hn network device, whether the signal intensity of the extra-domain node transmitting the joining application information is greater than or equal to the first preset threshold;
changing the networking lamp of the G.hn network device in a second present time window when the signal intensity of the extra-domain node transmitting the joining application information is not less than the first preset threshold; and
allowing the extra-domain node to join in the current domain, if the key-press operation is received by the Ghn network device when changing the networking lamp.

8. A networking apparatus for a home network with a universal wired medium networking technology G.hn, located in a G.hn network device, comprising:
a first reception module, configured to receive a key-press operation;
a second reception module, configured to broadcast an notice of open registration of current domain, and receive joining application information of applying for joining in the current domain from an extra-domain node in a preset first time window;
a first determination module, configured to determine whether a signal intensity of the extra-domain node transmitting the joining application information is greater than or equal to a first preset threshold; and
a processing module, configured to allow the extra-domain node to join in the current domain in the case that a determination result of the determination module is yes.

9. The apparatus according to claim 8, further comprising:
a transmission module, configured to detect whether there currently exists an intra-domain node of which the signal intensity is greater than or equal to a second preset threshold, and transmit the joining application information to the intra-domain node of which the signal intensity is greater than or equal to the second preset threshold if a detection result is that there exists the intra-domain node; or, transmit the joining application information to the intra-domain node of which the signal intensity is greater than or equal to the second preset threshold when an notice of open registration broadcasted by the intra-domain node is received.

10. The apparatus according to claim 8 or 9, further comprising:
a second determination module, configured to, in the case that the joining application information of applying for joining the current domain from the extra-domain node is received outside the first preset time window or when the notice of open registration of the current domain is not broadcasted by the G.hn network device, determine whether the signal intensity of the extra-domain node transmitting the joining application information is greater than or equal to the first preset threshold;
a control module, configured to control the networking lamp to change in a second preset time window in the case that a determination result of the second determination module is yes; and
an input module, configured to allow the extra-domain node to join in the current domain if the key-press operation is received when the networking lamp is changed.
